# EUROPÄISCHE PATENTSCHRIFT

(11) **EP 1 656 803 B1**
(45) Veröffentlichungstag und Bekanntmachung des Hinweises auf die Patenterteilung: **17.12.2008**
(21) Anmeldenummer: 04763969.5
(22) Anmeldetag: 10.08.2004
(51) Int. Cl.: G06K 19/07, H04Q 7/20

(54) **VERFAHREN ZUM BETREIBEN EINER CHIPKARTE, AUF DER MEHRERE APPLIKATIONEN IMPLEMENTIERT SIND**
METHOD FOR OPERATING A CHIP CARD ON WHICH A PLURALITY OF APPLICATIONS ARE IMPLEMENTED
PROCEDE POUR FAIRE FONCTIONNER UNE CARTE A PUCE SUR LAQUELLE PLUSIEURS APPLICATIONS SONT MISES EN OEUVRE

(30) Priorität: 13.08.2003 DE 10337257
(43) Veröffentlichungstag der Anmeldung: 17.05.2006
(73) Patentinhaber: Giesecke & Devrient GmbH, 81677 München (DE)
(72) Erfinder: DIETZE, Claus, 82395 Obersoechering (DE)
(74) Vertreter: Klunker . Schmitt-Nilson . Hirsch
(86) Internationale Anmeldenummer: PCT/EP2004/008956
(87) Internationale Veröffentlichungsnummer: WO 2005/020604

(56) Entgegenhaltungen:
- WO-A-98/32089
- US-A- 5 586 338
- US-A1- 2002 147 012
- "R GLOBAL SYSTEM FOR MOBILE COMMUNICATIONS Digital cellular telecommunications system; Service accessibility (GSM 02.11 version 5.0.0); DRAFT prETS 300 921" November 1996 (1996-11), ETSI STANDARDS, EUROPEAN TELECOMMUNICATIONS STANDARDS INSTITUTE, SOPHIA-ANTIPO, FR , XP014014844 ISSN: 0000-0001 Seite 10, Zeile 36 - Seite 12, Zeile 15
- "Digital cellular telecommunications system (Phase 2+); AT command set for GSM Mobile Equipment (ME) (GSM 07.07 version 7.3.0 Release 1998); ETSI TS 100 916" ETSI STANDARDS, EUROPEAN TELECOMMUNICATIONS STANDARDS INSTITUTE, SOPHIA-ANTIPO, FR, Bd. 3-T2;SMG4, Nr. V730, Juli 1999 (1999-07), XP014005680 ISSN: 0000-0001
- PATENT ABSTRACTS OF JAPAN Bd. 2000, Nr. 09, 13. Oktober 2000 (2000-10-13) & JP 2000 163539 A (DAINIPPON PRINTING CO LTD), 16. Juni 2000 (2000-06-16)

## Beschreibung

Die Erfindung betrifft ein Verfahren zum Betreiben einer Chipkarte, auf der mehrere Applikationen implementiert sind. Weiterhin betrifft die Erfindung eine Chipkarte, auf der mehrere Applikationen implementiert sind.

Chipkarten können sehr vielfältig eingesetzt werden, beispielsweise zur Abwicklung von Transaktionen des Zahlungsverkehrs, als Ausweisdokumente bei Zugangskontrollen, als Berechtigungsnachweis zur Nutzung eines Mobilfunksystems usw. Hierzu sind auf den Chipkarten Applikationen in Form von Hardware oder Software implementiert, die jeweils die gewünschte Funktionalität zur Verfügung stellen. Angesichts der Vielzahl der Einsatzmöglichkeiten und der damit verbundenen Vielzahl von Funktionalitäten wird zunehmend dazu übergegangen, auf derselben Chipkarte mehrere Applikationen zu implementieren. Die implementierten Applikationen können von verschiedenen Applikationsanbietern bereitgestellt werden, wobei in vielen Fällen einer dieser Applikationsanbieter der Kartenherausgeber ist. Dabei besteht insbesondere die Möglichkeit, dass mehrere gleiche oder ähnliche Applikationen verschiedener oder derselben Applikationsanbieter auf derselben Chipkarte implementiert sind. Bei der Benutzung der Chipkarte in Zusammenwirkung mit einem Endgerät wird von dem Endgerät eine der Applikationen für die Ausführung selektiert. Es stellt sich daher das Problem, wie die Selektion einer Applikation durchgeführt werden soll.

US 2002/0147012 A1 geht von der Aufgabe aus, einen Kommunikationsnetzwerkbetreiber in die Lage zu versetzen einen Mechanismus zu haben, der sicherstellt, daß ein bevorzugtes Roaming-Netzwerk mit einer vorgegebenen oder flexiblen Priorität ausgewählt wird.

Entsprechend einem ersten Aspekt dieser Aufgabe wird ein Mobiltelefon zur Verfügung gestellt, das automatisch einen Roaming-Dienst mit einem Netzwerk wiederherstellt, basierend auf einer sogenannten Operatorliste, indem durch Benutzung einer programmierten SIM-Karte das registrierte, öffentliche Kommunikationsnetzwerk ("RPLMN") während einer Aktualisierung des Ortes modifiziert wird.

Entsprechend einem zweiten Aspekt der Aufgabe, wird ein Verfahren zur Verfügung gestellt, um automatisch einen Roaming-Dienst für ein Mobiltelefon aufzubauen, wobei dabei die Benutzung einer programmierten SIM-Karte enthalten ist, so daß die bevorzugten Kommunikationsnetzwerke im Vergleich zu anderen Netzwerken ausgewählt werden. Obwohl die Aktualisierung des Ortes auf die gleiche Art und Weise wie vorher ausgeführt wird, wird folglich auch die zugegriffene Netzwerkliste modifiziert.

Die technische Spezifikation "Global System for Mobile communications", Digital cellular telecommunications system; Service accessibility (GSM 02.11, Version 5.0.0)" offenbart im besonderen unter Punkt 3.2 das Verfahren zur Auswahl eines Netzwerkes durch ein Mobiltelefon.

Der Erfindung liegt daher die Aufgabe zugrunde, die Selektion einer von mehreren auf einer Chipkarte implementierten Anwendungen möglichst optimal zu gestalten.

Diese Aufgabe wird durch ein Verfahren mit der Merkmalskombination des Anspruchs 1 gelöst.

Die Erfindung bezieht sich auf ein Verfahren zum Betreiben einer Chipkarte, auf der mehrere Applikationen implementiert sind, wobei eine der Applikationen von einem Endgerät selektiert wird, wobei dass dem Endgerät von der Chipkarte eine bevorzugt zu selektierende Applikation angegeben wird.

Das erfindungsgemäße Verfahren zeichnet sich dadurch aus, dass bei der Angabe der bevorzugt zu selektierenden Applikation die Art der Applikation und die Unterstützung der Applikation durch das Endgerät berücksichtigt wird. Dadurch kann vermieden werden, dass die Angabe der Chipkarte vom Endgerät nicht umgesetzt wird, weil eine andersartige Applikation selektiert werden soll oder weil das Endgerät die Applikation nicht unterstützt. Außerdem besteht die Möglichkeit, abhängig von den jeweiligen Anforderungen des Endgeräts jeweils eine andere bevorzugte Applikation anzugeben. Insbesondere kann das erfindungsgemäße Verfahren so ausgebildet werden, dass nach Möglichkeit eine Applikation des Herausgebers der Chipkarte als bevorzugt zu selektierende Applikation angegeben wird. Auf diese Weise kann der Herausgeber der Chipkarte sicherstellen, dass die von ihm herausgegebenen Applikationen vom Endgerät bevorzugt selektiert werden.

Es kann auf unterschiedliche Weise ermittelt werden, welche der Applikationen dem Endgerät als bevorzugt zu selektierende Applikation angegeben wird. So kann die Angabe beispielsweise auf Basis eines auf der Chipkarte implementierten Algorithmus erfolgten. Dies hat den Vorteil, dass nahezu beliebige Vorgehensweisen zur Ermittlung der bevorzugten Applikation implementiert werden können. Vorzugsweise erfolgt die Angabe dabei abhängig von der Häufigkeit der Selektion und/oder Aktivierung der auf der Chipkarte implementierten Applikationen. Dadurch kann erreicht werden, dass bevorzugt eine gängige und häufig eingesetzte Applikation selektiert wird. Alternativ zur Verwendung eines Algorithmus kann die Angabe der bevorzugt zu selektierenden Applikation auch abhängig von einer festen Vorgabe erfolgen. Dies hat den Vorteil, dass die Priorisierung der implementierten Applikationen klar geregelt ist und definitiv feststeht. Die feste Vorgabe wird in der Regel vom Herausgeber der Chipkarte definiert. Der Herausgeber kann somit Einfluss darauf nehmen, welche Applikation vom Endgerät selektiert wird.

Die Angabe der bevorzugt zu selektierenden Applikation kann durch Sortierung eines Verzeichnisses erfolgen, in dem Einträge für die implementierten Applikationen abgelegt sind. Dies hat den Vorteil, dass an der Vorgehensweise des Endgeräts bei der Selektion der Applikation keinerlei Änderungen vorgenommen werden müssen, da das Verzeichnis im Rahmen der Selektion ohnehin ausgewertet wird. Dabei werden die Einträge der Reihe nach durchgegangen, bis die gewünschte Applikation ermittelt ist. Über die Reihenfolge der Einträge im Verzeichnis kann somit eine Priorisierung der Applikationen erfolgen. Diese Vorgehensweise ist einerseits bei festen Vorgaben anwendbar, bei denen sich die feste Vorgabe in einer entsprechenden festen Reihenfolge der Einträge manifestiert. Andererseits können damit auch Änderungen der Priorisierung umgesetzt werden, indem das Verzeichnis entsprechend umsortiert wird.

Auf der erfindungsgemäßen Chipkarte sind mehrere Applikationen für eine Selektion durch ein Endgerät implementiert. Die Besonderheit besteht dabei darin, dass weiterhin ein Mechanismus zur Priorisierung der Applikationen implementiert ist, durch den dem Endgerät jeweils eine bevorzugt zu selektierende Applikation angegeben wird. Insbesondere können auf der Chipkarte Applikationen verschiedener Applikationsanbieter implementiert sein.

Die erfindungsgemäße Chipkarte kann beispielsweise für den Einsatz bei einem als Mobilteil eines Mobilfunksystems ausgebildeten Endgerät vorgesehen sein. Dabei können auf der Chipkarte mehrere Applikationen zum Nachweis einer Netzzugangsberechtigung implementiert sein. Bei Mobilfunkanwendungen ist es von entscheidender Bedeutung, welche Applikation und damit welcher Netzzugang selektiert wird, da die Einnahmen des Netzbetreibers unmittelbar davon abhängen. Es besteht daher ein starkes Interesse daran, einen Einfluss auf die Selektion des Netzzugangs auszuüben.

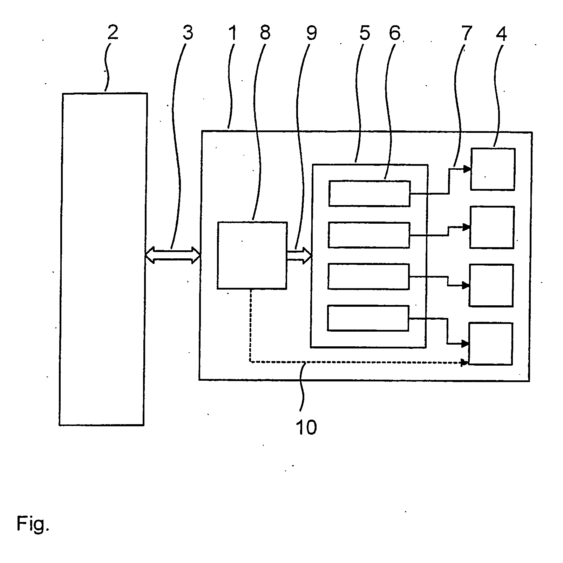

Die Erfindung wird im folgenden anhand des in der Zeichnung dargestellten Ausführungsbeispiels näher erläutert.

Die einzige Fig. zeigt eine schematische Darstellung des Betriebs einer Chipkarte 1 gemäß der Erfindung. Die in der Fig. dargestellte Betriebssituation bezieht sich auf eine Mobilfunkanwendung, bei der die Chipkarte 1 in Zusammenwirkung mit einem als ein Mobilteil 2 ausgebildeten Endgerät betrieben wird. Die Chipkarte 1 wird für den Betrieb des Mobilteils 2 benötigt, da sie unter anderem Berechtigungsinformationen enthält, die für die Herstellung eines Netzzugangs beispielsweise im Rahmen eines Telefongesprächs erforderlich sind. Die Erfindung ist allerdings nicht auf dieses Ausführungsbeispiel beschränkt, sondern generell bei Chipkarten 1 mit mehreren Applikationen einsetzbar.

Die in der Fig. wiedergegebene Darstellung der Chipkarte 1 ist stark vereinfacht und zeigt lediglich Funktionskomponenten, die im Zusammenhang mit der Erfindung von Interesse sind. Das Mobilteil 2 ist als Black Box dargestellt, da dessen interner Aufbau für die Erfindung nicht relevant ist. Zwischen der Chipkarte 1 und dem Mobilteil 2 ist eine durch einen Doppelpfeil 3 angedeutete Datenverbindung ausgebildet, über die eine Datenübertragung zischen der Chipkarte 1 und dem Mobilteil 2 stattfindet. Auf der Chipkarte 1 sind mehrere Applikationen 4 implementiert. Die Applikationen 4 können im vorliegenden Ausführungsbeispiel dem Nachweis einer Zugangsberechtigung zum Mobilfunknetz unterschiedlicher Netzbetreiber dienen. Weiterhin weist die Chipkarte 1 ein Verzeichnis 5 auf, in dem für jede Applikation 4 ein Eintrag 6 abgelegt ist. Die Einträge 6 enthalten Informationen über die Applikationen 4 und ermöglichen einen Zugriff auf die Applikationen 4. Hierzu führt jeweils ein Pfad 7 vom Eintrag 6 zur zugehörigen Applikation 4. Schließlich ist auf der Chipkarte 1 ein Priorisierungsmechanismus 8 vorgesehen, der, wie durch einen Pfeil 9 dargestellt, auf das Verzeichnis 5 einwirkt.

Beim Betrieb der Chipkarte 1 wird eine der Applikationen 4 vom Mobilteil 2 für die Ausführung selektiert. Hierbei ist es für die Erfindung von wesentlicher Bedeutung, dass dem Mobilteil 2 von der Chipkarte 1 eine der Applikationen 4 zur bevorzugten Selektion angegeben wird. Dadurch ist es der Chipkarte 1 möglich, Einfluss auf die Selektion der Applikation 4 zu nehmen, obwohl die Selektion nicht von der Chipkarte 1, sondern vom Mobilteil 2 durchgeführt wird. Die Angabe der bevorzugt zu selektierenden Applikation 4 kann beispielsweise dadurch erfolgen, dass der Priorisierungsmechanismus 8 eine Sortierung des Verzeichnisses 5 veranlasst. Die Einträge 6 des Verzeichnisses 5 werden durch die Sortierung entsprechend einer gewünschten Rangfolge der zugehörigen Applikationen 4 angeordnet. Dabei wird der Eintrag 6 für die bevorzugt zu selektierende Applikation 4 so angeordnet, dass er, bezogen auf die für die Selektion in Frage kommenden Applikationen 4, im Rahmen der Selektion durch das Mobilteil 2 als erstes ausgewertet wird. Falls bei der Auswertung festgestellt wird, dass der Eintrag 6 mit den Anforderungen des Mobilteils 2 kompatibel ist, wird die zum Eintrag 6 zugehörige Applikation 4 ausgeführt. Eine Kompatibilität mit den Anforderungen des Mobilteils 2 liegt dann vor, wenn das Mobilteil 2 die Ausführung der Applikation 4 unterstützt und die Ausführung dieser Art von Applikation 4 beabsichtigt. Die sequentielle Auswertung der Einträge 6 des Verzeichnisses 5 ermöglicht es somit, über die Reihenfolge der Auswertung die Rangfolge unter den zugehörigen Applikationen 4 festzulegen. Die Rangfolge bezieht sich dabei allerdings streng genommen jeweils nur auf die Gruppe von Applikationen 4, die für die augenblickliche Selektion in Frage kommen, d. h. die mit den augenblicklichen Anforderungen des Mobilteils 2 kompatibel sind. Mit anderen Worten, die Einträge 6 werden in der durch die Sortierung vorgegebenen Reihenfolge ausgewertet, bis die erste passende Applikation 4 gefunden ist. Diese Applikation 4 wird für die Ausführung selektiert. Wenn eine weitere passende Applikation 4 auf der Chipkarte 1 vorhanden ist, die erst später in der Sortierung folgt, so wird diese nicht selektiert und folglich auch nicht ausgeführt. Die Angabe der bevorzugt zu selektierenden Applikation 4 muss nicht notwendigerweise durch eine entsprechende Sortierung der Einträge 6 des Verzeichnisses 5 erfolgen. Es können vielmehr auch andere Vorgehensweisen eingesetzt werden, die geeignet sind, dem Mobilteil 2 eine Information über die bevorzugt zu selektierende Applikation 4 zu vermitteln.

Bevor eine Angabe zu der bevorzugt zu selektierenden Applikation 4 gemacht werden kann, muss seitens der Chipkarte 1 feststehen, welche der Applikationen 4 bevorzugt zu selektieren ist, bzw. in welcher Rangfolge die Applikationen 4 zueinander stehen. Die Ermittlung der bevorzugt zu selektierenden Applikation 4 kann über Vorgaben erfolgen, die auf der Chipkarte 1 gespeichert sind. Die Vorgaben werden beispielsweise vom Herausgeber der Chipkarte 1 festgelegt und geben die Rangfolge der Applikationen 4 für die Selektion an. Dabei ist es nicht erforderlich, die Vorgaben als explizite Werte auf der Chipkarte 1 zu speichern. Stattdessen besteht auch die Möglichkeit, die Vorgaben durch eine fest vorgegebene Sortierung der Einträge 6 des Verzeichnisses 5 zu definieren. Bei diesem Ausführungsbeispiel ist die Rangfolge der Applikationen 4 im Verzeichnis 5 enthalten und wird nicht mehr geändert. Der in der Fig. dargestellte Priorisierungsmechanismus 8 ist damit ebenfalls implizit im Verzeichnis 5 enthalten. Unabhängig davon, in welcher Form die Vorgaben auf der Chipkarte 1 realisiert sind, kann der Herausgeber der Chipkarte 1 über die Festlegung der Vorgaben sicherstellen, dass bestimmte Applikationen 4 bevorzugt selektiert werden. Falls der Herausgeber der Chipkarte 1 eigene Applikationen 4 auf der Chipkarte 1 implementiert, wird er die Vorgaben in der Regel so festlegen, dass seine eigenen Applikationen 4 bevorzugt selektiert werden.

Eine andere Möglichkeit der Ermittlung der bevorzugt zu selektierenden Applikation 4 besteht darin, dass von dem Priorisierungsmechanismus 8 die Rangfolge der Applikationen 4 entsprechend der Häufigkeit ihrer Selektion und Aktivierung festgelegt wird. Dabei ist es wiederum möglich, der Rangfolge durch eine entsprechende Sortierung der Einträge 6 des Verzeichnisses 5 Ausdruck zu verleihen. Im Gegensatz zur festen Vorgabe durch den Herausgeber der Chipkarte 1 wird bei dieser Variante die Rangfolge der Applikationen 4 fortwährend geprüft und bei einer Änderung der Rangfolge die Sortierung des Verzeichnisses 5 ebenfalls entsprechend geändert.

Außerdem können für die Ermittlung der bevorzugt zu selektierenden Applikation 4 nahezu beliebige andere Algorithmen herangezogen werden, so dass die Erfindung eine große Flexibilität für eine optimale Anpassung an die jeweiligen Gegebenheiten bietet.

## Patentansprüche

1. Verfahren zum Betreiben einer Chipkarte (1), auf der mehrere Applikationen (4) implementiert sind, wobei eine der Applikationen (4) von einem Endgerät (2) selektiert wird, wobei dem Endgerät (2) von der Chipkarte (1) eine bevorzugt zu selektierende Applikation (4) angegeben wird, **dadurch gekennzeichnet, dass** bei der Angabe der bevorzugt zu selektierenden Applikation (4) die Art der Applikation (4) und die Unterstützung der Applikation (4) durch das Endgerät (2) berücksichtigt wird.

2. Verfahren nach Anspruch 1, **dadurch gekennzeichnet, dass** nach Möglichkeit eine Applikation (4) des Herausgebers der Chipkarte (1) als bevorzugt zu selektierende Applikation (4) angegeben wird.

3. Verfahren nach einem der vorhergehenden Ansprüche, **dadurch gekennzeichnet, dass** die Angabe der bevorzugt zu selektierenden Applikation (4) auf Basis eines auf der Chipkarte (1) implementierten Algorithmus erfolgt.

4. Verfahren nach einem der vorhergehenden Ansprüche, **dadurch gekennzeichnet, dass** die Angabe der bevorzugt zu selektierenden Applikation (4) abhängig von der Häufigkeit der Selektion und/oder Aktivierung der auf der Chipkarte (1) implementierten Applikationen (4) erfolgt.

5. Verfahren nach einem der Ansprüche 1 bis 3, **dadurch gekennzeichnet, dass** die Angabe der bevorzugt zu selektierenden Applikation (4) abhängig von einer festen Vorgabe erfolgt.

6. Verfahren nach Anspruch 5, **dadurch gekennzeichnet, dass** die feste Vorgabe vom Herausgeber der Chipkarte (1) definiert wird.

7. Verfahren nach einem der vorhergehenden Ansprüche, **dadurch gekennzeichnet, dass** die Angabe der bevorzugt zu selektierenden Applikation (4) durch Sortierung eines Verzeichnisses (5) erfolgt, in dem Einträge (6) für die implementierten Applikationen (4) abgelegt sind.

8. Chipkarte, auf der mehrere Applikationen (4) für eine Selektion durch ein Endgerät (2) implementiert sind, wobei ein Mechanismus (8) zur Priorisierung der Applikationen (4) implementiert ist, durch den dem Endgerät (2) jeweils eine bevorzugt zu selektierende Applikation (4) angegeben wird, **dadurch gekennzeichnet, dass** bei der Angabe der bevorzugt zu selektierenden Applikation (4) die Art der Applikation (4) und die Unterstützung der Applikation (4) durch das Endgerät (2) berücksichtigt wird.

9. Chipkarte nach Anspruch 8, **dadurch gekennzeichnet, dass** Applikationen (4) verschiedener Applikationsanbieter implementiert sind.

10. Chipkarte nach einem der Ansprüche 8 oder 9, **dadurch gekennzeichnet, dass** sie für den Einsatz bei einem als Mobilteil eines Mobilfunksystems ausgebildeten Endgerät (2) vorgesehen ist.

11. Chipkarte nach Anspruch 10, **dadurch gekennzeichnet, dass** mehrere Applikationen (4) zum Nachweis einer Netzzugangsberechtigung implementiert sind.

## Claims

1. A method for operating a chip card (1) on which a plurality of applications (4) are implemented, wherein one of the applications (4) is selected by a terminal (2), an application (4) to be preferably selected being specified to the terminal (2) by the chip card (1), **characterized in that** the type of application (4) and the support of the application (4) is taken into account by the terminal (2) upon the specification of the application (4) to be preferably selected.

2. The method according to claim 1, **characterized in that,** if possible, an application (4) of the issuer of the chip card (1) is specified as the application (4) to be preferably selected.

3. The method according to either of the previous claims, **characterized in that** the specification of the application (4) to be preferably selected is made on the basis of an algorithm implemented on the chip card (1).

4. The method according to any of the previous claims, **characterized in that** the specification of the application (4) to be preferably selected is made in dependence on the frequency of the selection and/or activation of the applications (4) implemented on the chip card (1).

5. The method according to any of claims 1 to 3, **characterized in that** the specification of the application (4) to be preferably selected is made in dependence on a fixed default.

6. The method according to claim 5, **characterized in that** the fixed default is defined by the issuer of the chip card (1).

7. The method according to any of the previous claims, **characterized in that** the specification of the application (4) to be preferably selected is made by sorting a directory (5) in which entries (6) for the implemented applications (4) are stored.

8. A chip card on which a plurality of applications (4) are implemented for a selection by a terminal (2), wherein a mechanism (8) for prioritizing the applications (4) is implemented by which an application (4) to be preferably selected is specified to the terminal (2) in each case, **characterized in that** the type of application (4) and the support of the application (4) is taken into account by the terminal (2) upon the specification of the application (4) to be preferably selected.

9. The chip card according to claim 8, **characterized in that** applications (4) of different application providers are implemented.

10. The chip card according to either of claims 8 and 9, **characterized in that** it is provided for use with a terminal (2) configured as a handset of a mobile communication system.

11. The chip card according to claim 10, **characterized in that** a plurality of applications (4) are implemented for proving a network access authorization.

## Revendications

1. Procédé de fonctionnement d'une carte à puce (1) sur laquelle plusieurs applications (4) sont implémentées, une des applications (4) étant sélectionnée par un terminal (2), une application (4) à sélectionner de préférence étant indiquée au terminal (2) par la carte à puce (1), **caractérisé en ce que**, lors de l'indication de l'application (4) à sélectionner de préférence, le terminal (2) tient compte du genre d'application (4) et du soutien de l'application (4).

2. Procédé selon la revendication 1, **caractérisé en ce que,** dans la mesure du possible, une l'application (4) de l'éditeur de la carte à puce (1) est indiquée en tant qu'application (4) à sélectionner de préférence.

3. Procédé selon une des revendications précédentes, **caractérisé en ce que** l'indication de l'application (4) à sélectionner de préférence a lieu sur la base d'un algorithme implémenté sur la carte à puce (1).

4. Procédé selon une des revendications précédentes, **caractérisé en ce que** l'indication de l'application (4) à sélectionner de préférence a lieu en fonction de la fréquence de la sélection et/ou de l'activation des applications (4) implémentées sur la carte à puce (1).

5. Procédé selon une des revendications de 1 à 3, **caractérisé en ce que** l'indication de l'application (4) à sélectionner de préférence a lieu en fonction d'une spécification fixe.

6. Procédé selon la revendication 5, **caractérisé en ce que** la spécification fixe est définie par l'éditeur de la carte à puce (1).

7. Procédé selon une des revendications précédentes, **caractérisé en ce que** l'indication de l'application (4) à sélectionner de préférence a lieu par tri d'un répertoire (5) dans lequel des entrées (6) sont enregistrées pour les applications (4) implémentées.

8. Carte à puce sur laquelle sont implémentées plusieurs applications (4) pour une sélection par un terminal (2), un mécanisme (8) de priorisation des applications (4) étant implémenté, par lequel une application (4) à sélectionner respectivement de préférence est indiquée au terminal (2), **caractérisée en ce que,** lors de l'indication de l'application (4) à sélectionner de préférence, il est tenu compte du genre d'application (4) et du soutien de l'application (4) par le terminal (2).

9. Carte à puce selon la revendication 8, **caractérisée en ce que** des applications (4) de différents fournisseurs d'applications sont implémentées.

10. Carte à puce selon une des revendications 8 ou 9, **caractérisée en ce qu'**elle est prévue pour être utilisée dans un terminal (2) conçu en tant que partie mobile d'un système de téléphonie mobile.

11. Carte à puce selon la revendication 10, **caractérisée en ce que** plusieurs applications (4) sont implémentées pour justifier d'une autorisation d'accès au réseau.
